(19) **Europäisches Patentamt**
**European Patent Office**
**Office européen des brevets**

(11) **EP 4 471 638 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*G06F 21/62* (2013.01)

(21) Application number: 23746328.6

(22) Date of filing: 20.01.2023

(86) International application number:
PCT/CN2023/073347

(87) International publication number:
WO 2023/143449 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.01.2022 CN 202210093551

(71) Applicant: Sony Group Corporation
Tokyo 108-0075 (JP)

(72) Inventor: LYU, Lingjuan
Beijing 100028 (CN)

(74) Representative: D Young & Co LLP
3 Noble Street
London EC2V 7BQ (GB)

(54) **METHODS, APPARATUSES AND SYSTEM FOR PRIVACY PROTECTION**

(57) The present disclosure relates to a method, apparatus and system for privacy protection. Various embodiments about privacy protection are described. In an embodiment, a model training method comprises: acquiring an actual dataset; performing a dataset condensation on the actual dataset by compressing a size of the actual dataset while preserving main feature of actual data in the actual dataset, to remove privacy information; and training a model using a condensed dataset resulting from the dataset condensation.

<u>400</u>

Fig. 4

EP 4 471 638 A1

## Description

## TECHNICAL FIELD

The present disclosure relates generally to privacy protection, and specifically to privacy protection in the field of artificial intelligence.

## BACKGROUND

With the continuous development of deep learning technology, a neural network model has been widely deployed on various systems and apparatuses including edge computing devices. To better improve a performance of the model in actual applications, the model may be trained using actual data. However, since the actual data may contain membership privacy such as customer feature, training the model directly using the actual data has a risk of privacy leakage.

One existing technical route for privacy protection is to use differential privacy technology. However, this kind of method has a significant influence on the performance and has a high requirement for computing power, and the training process converges slowly and cannot meet actual application requirements. Another existing technical route for privacy protection is to generate data having the same distribution as original data using a data generation model. However, the training process of the data generation model is unstable and still has a risk of leaking the original data.

In addition, in the "Internet of Everything" era, collection and storage quantities of personal privacy information of users are greeted with explosive increase for enterprises, so that how to respect the personal privacy information of the users to ensure legal compliance while promoting data communication and sharing to advance enterprise and industry upgrading, has become a proposition that practitioners all need to focus on.

## SUMMARY

One aspect of the present disclosure relates to a model training method. According to an embodiment of the present disclosure, the model training method comprises: acquiring an actual dataset; performing a dataset condensation on the actual dataset by compressing a size of the actual dataset while preserving main feature of actual data in the actual dataset, to remove privacy information; and training a model using a condensed dataset resulting from the dataset condensation.

One aspect of the present disclosure relates to a model deployment method. According to an embodiment of the present disclosure, the model deployment method comprises: deploying a trained model obtained by performing steps of the model training method according to the embodiment of the present disclosure, to process data, wherein the actual data used to obtain the trained model has the same distribution as data to be processed.

One aspect of the present disclosure relates to a method for generating a model. According to an embodiment of the present disclosure, the method for generating a model comprises: generating a model by performing steps of the model training method according to the embodiment of the present disclosure.

One aspect of the present disclosure relates to a training apparatus. According to an embodiment of the present disclosure, the training apparatus comprises a data acquisition module configured to acquire an actual dataset; a dataset condensation module configured to perform a dataset condensation on the actual dataset by compressing a size of the actual dataset while preserving main feature of actual data in the actual dataset, to remove privacy information; and a training module configured to train a model using a condensed dataset resulting from the dataset condensation.

One aspect of the present disclosure relates to an application apparatus. According to an embodiment of the present disclosure, the application apparatus comprises a processing device configured to perform steps of the model deployment method according to the embodiment of the present disclosure.

One aspect of the present disclosure relates to a system for privacy protection. According to an embodiment of the present disclosure, the system for privacy protection comprises the training apparatus according to the embodiment of the present disclosure; and an application apparatus configured to deploy a trained model obtained by the training apparatus, to process data, wherein the actual data used to obtain the trained model has the same distribution as data to be processed.

Yet another aspect of the present disclosure relates to a computer-readable storage medium having one or more instructions stored thereon. In some embodiments, the one or more instructions may, when executed by a processor, cause the processor to perform steps of the methods according to the embodiments of the present disclosure.

Yet another aspect of the present disclosure relates to a computer program product comprising one or more instructions. In some embodiments, the one or more instructions may, when executed by a processor, cause the processor to perform steps of the methods according to the embodiments of the present disclosure.

The above SUMMARY is provided to summarize some exemplary embodiments to provide a basic understanding of the aspects of the subject matter described herein. Therefore, the above features are merely examples and should not be construed to narrow the scope or spirit of the subject matter described herein in any way. Other features, aspects, and advantages of the subject matter described herein will become apparent from the following DETAILED DESCRIPTION stated in conjunction with the accompanying drawings.

## BRIEF DESCRIPTION OF THE DRAWINGS

A better understanding of the present disclosure may be obtained when the following specific description of the embodiments is considered in conjunction with the accompanying drawings. The same or similar reference numbers are used throughout the drawings to refer to the same or similar components . The accompanying drawings, together with the following specific description, are incorporated in and form a part of the specification, and serve to illustrate the embodiments of the present disclosure and explain the principles and advantages of the present disclosure. In the drawings:

Fig. 1 is a flow diagram illustrating an example of steps of a model training method according to an embodiment of the present disclosure.

Fig. 2 is a flow diagram illustrating an example of steps of performing a dataset condensation on an actual dataset according to an embodiment of the present disclosure.

Fig. 3 is a comparison diagram for visually presenting a privacy protection effect of performing a dataset condensation on an actual dataset according to an embodiment of the present disclosure.

Fig. 4 is a schematic diagram illustrating an example of a configuration of a system for privacy protection according to an embodiment of the present disclosure, in which main functional modules forming an apparatus and information interaction are also illustrated.

Figs. 5A-5C are schematic diagrams illustrating multiple application scenarios of a solution for privacy protection according to an embodiment of the present disclosure.

Fig. 6 illustrates an example block diagram of a computer that can be implemented as a training apparatus, application apparatus, or system according to an embodiment of the present disclosure.

While the embodiments described in this disclosure may easily have various modifications and alternative forms, specific embodiments thereof are shown as examples in the drawings and are herein described in detail. It should be understood, however, that the drawings and detailed description thereof are not intended to limit the embodiments to the specific form disclosed, but rather to cover all modifications, equivalents and alternatives falling within the spirit and scope of the claims.

## DETAILED DESCRIPTION

Representative applications in various aspects such as the device and method according to the present disclosure are described below. The description of these examples is merely to add context and help understand the described embodiments. Therefore, it is apparent to those skilled in the art that the embodiments described below may be implemented without some or all of the specific details. In other cases, well known process steps are not described in detail to avoid unnecessarily obscuring the described embodiments. Other applications are also possible, and the solutions of the present disclosure are not limited to these examples.

The inventors of the present application have recognized that, a model trained using actual data can be more accurately applicable to a specific application scenario than a generic model.

However, the model obtained directly using the actual data may leak privacy information in the actual data. For example, in some cases, it may be determined whether target data is used to train a model by observing an output of the model for the target data, thereby obtaining membership privacy of the target data. More specifically, for example, if face image data captured by a camera is directly used for model training, a trained model may be maliciously utilized, for example, deducing whether someone has entered a camera observation range from an output of the model. Therefore, in the case of training a model using actual data, it is very necessary to protect privacy information in the actual data.

To this end, it is proposed by the applicant in the present disclosure that, a dataset condensation is performed on an actual dataset to effectively extract feature in data and remove privacy information, thereby protecting membership privacy.

The solution of the present application is applicable to all scenarios where privacy protection is required for actual data for training a model, especially business scenarios for various computer vision classification tasks, such as portraits of visitors to an unmanned supermarket, hospital and bus station. In some embodiments, the solution of the present application can introduce time sequence information of a plurality of frames of surveillance video, thereby adapting to, for example, privacy protection of a user movement trajectory.

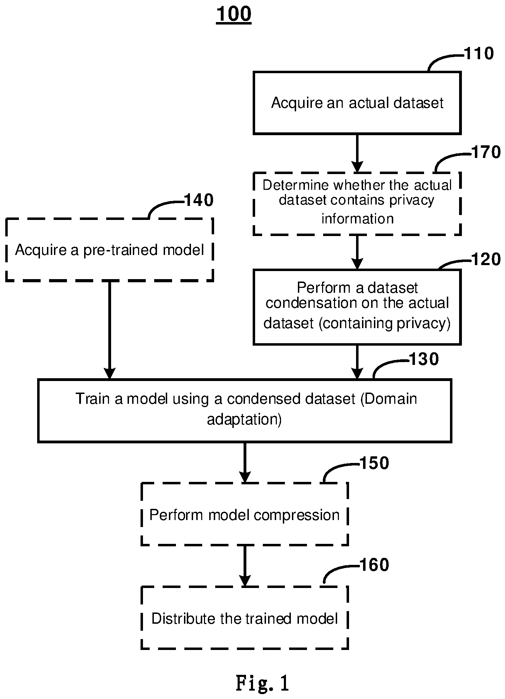

Fig. 1 illustrates a flow diagram of an example of steps of a model training method according to an embodiment of the present disclosure.

The method shown in Fig. 1 may be performed by any apparatus including a processing device. For example, the method shown in Fig. 1 may be performed by a local server (such as an edge server).

As shown in Fig. 1, according to the embodiment of the present disclosure, the model training method 100 may mainly include the following steps:

> step 110, acquiring an actual dataset;
> step 120, performing a dataset condensation on the actual dataset by compressing a size of the actual dataset while preserving main feature of actual data in the actual dataset, to remove privacy information; and
> step 130, training a model using a condensed dataset resulting from the dataset condensation.

First, as shown in Fig. 1, in the step 110, an actual dataset is acquired.

In some embodiments, the step 110 of acquiring the actual dataset comprises receiving an encrypted actual dataset and decrypting the encrypted actual dataset.

As described above, the actual data may contain membership privacy, so that transmitting and receiving the actual dataset in an encrypted manner is beneficial to avoid illegal access by another device to the actual dataset, thereby reducing the risk of privacy information leakage.

Next, as shown in Fig. 1, in the step 120, a dataset condensation is performed on the actual dataset.

The dataset "condensation" here may vividly indicate the process of preserving main feature of data in the dataset while compressing the size of the dataset. The "main feature" of the data in the dataset may be understood as most representative feature among all features, i.e., most critical feature for training the model. The measure is that loss obtained by training on a generated small dataset is similar to that on original data. Therefore, compared to a data subset of the same size that is extracted from the original dataset, a synthetized dataset from condensation (hereinafter referred to as the condensed dataset) contains more effective feature. A neural network trained with the condensed dataset has higher accuracy on test data than a neural network trained with the above extracted subset.

Optionally, in some embodiments, the method 100 may further include determining whether the acquired actual dataset contains privacy information (step 170). Thus, in the performing the dataset condensation on the actual dataset (in the step 120), the dataset condensation can be performed only on the actual dataset containing privacy information. Specifically, by identifying a dataset in the actual dataset which contains privacy information, the dataset condensation can be performed only on the dataset containing privacy information. Thus, for the dataset containing privacy information, the model is trained using its condensed dataset; and for a dataset not containing privacy information, the model may be trained directly using the original dataset. Advantageously, with this screening processing, a targeted dataset condensation can be performed, thereby improving accuracy and efficiency of model training while protecting privacy.

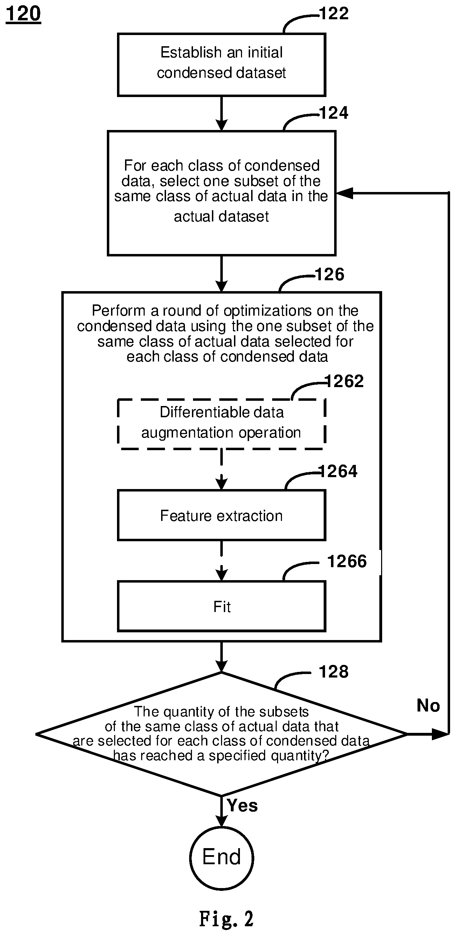

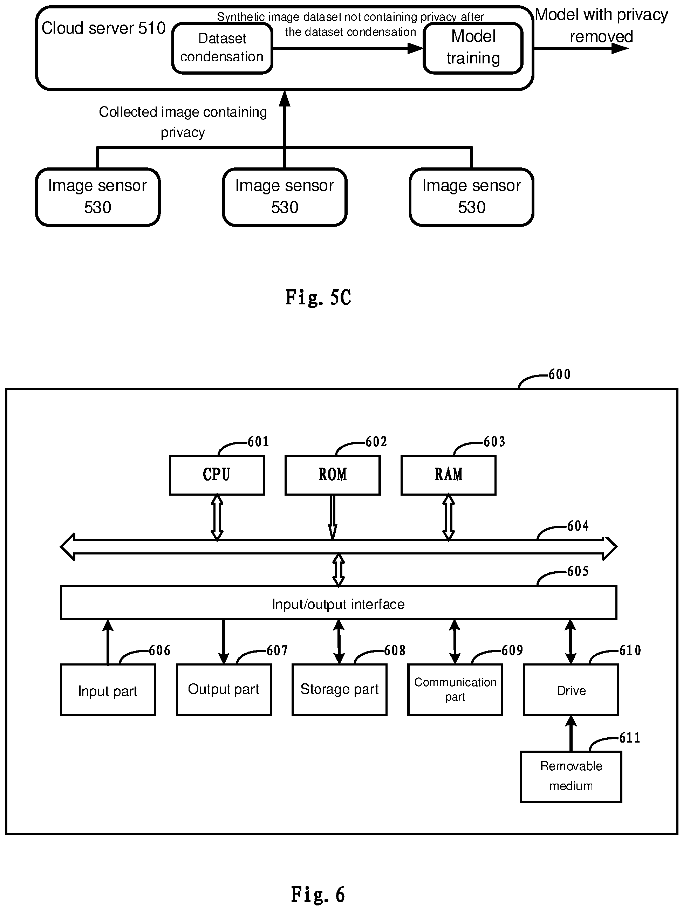

An example of the performing the dataset condensation on the actual dataset (the step 120) is illustrated in detail below in conjunction with a flow diagram of Fig. 2. Those skilled in the art will readily understand that, the method of performing the dataset condensation on the actual dataset illustrated in Fig. 2 is only an example, and the present disclosure is not limited thereto, and those skilled in the art can also achieve privacy removal using existing various dataset condensation (DC) and dataset distillation (DD) methods in conjunction with the idea disclosed in the present disclosure. Specifically, it can be achieved by using, for example, an existing KIP (Kernel Inducing Points)-introduced dataset condensation solution, a DSA (Differentiable Siamese Augmentation) -introduced dataset condensation solution, or a dataset distillation solution of Infinitely Wide Convolutional Networks. In some embodiments of the present disclosure, the dataset "condensation" is a concept in a broad sense that is intended to encompass the existing dataset condensation and dataset distillation solutions. Dataset distillation requires more complex calculations than dataset condensation in the narrow sense, and may be applied in, for example, a cloud server of an embodiment of the present disclosure that is described below in conjunction with Fig. 5C.

In some embodiments, the performing the dataset condensation on the actual dataset may include establishing an initial condensed dataset (step 122). The established condensed dataset $S$ is smaller than the actual dataset $\mathcal{T}$. In particular, in some embodiments, the condensed dataset $S$ is much smaller than the actual dataset $\mathcal{T}$. Those skilled in the art will readily appreciate that, the smaller the condensed dataset $S$ compared to the actual dataset $\mathcal{T}$, the higher the degree of the dataset condensation.

In some embodiments, the performing the dataset condensation on the actual dataset further includes: adjusting a condensation rate of the dataset condensation as needed.

$$\gamma_{ipc} = \frac{|S|}{|\mathcal{T}|}$$

For example, in some embodiments, the condensation rate may be denoted by .

The inventors of the present application have recognized that, a size of the condensed dataset $S$ affects not only

the dataset condensation processing itself, but also the process of training the model using the condensed dataset $\mathcal{S}$. For example, by compressing the condensed dataset $\mathcal{S}$ to simplify the trained model, a hardware condition required for operating the model can be further lowered.

For the actual dataset $\mathcal{T}$, assume that it contains $C(C \in \mathbb{N})$ classes of data. Accordingly, data of the condensed dataset $\mathcal{S}$ may be divided into $C$ corresponding classes.

Condensed data $\mathcal{B}_c^{\mathcal{S}}$ of a class $c$ ($1 \leq c \leq C$) is less than actual data of the same class. In particular, in some embodiments, condensed data of each class may be much less than actual data of the same class. In some embodiments, the quantity of condensed data of each class may be specified as ipc.

The inventors of the present application have recognized that, random initialization on the condensed dataset can make initialized data unrelated to the actual data, i.e., not contain any privacy information, thereby effectively ensuring the protection effect of the dataset condensation for privacy.

Therefore, in some embodiments, the establishing the initial condensed dataset may include performing random initialization on the condensed dataset. For example, normal distribution initialization can be performed on the condensed dataset so that the initial condensed dataset has a normal distribution. However, those skilled in the art will readily appreciate that, the manner of the initialization of the condensed dataset is not limited thereto and may be selected as needed.

Subsequently, the condensed dataset is optimized so that the condensed dataset has main feature of the actual data in the actual dataset (steps 124-128).

The inventors of the present application have recognized that, data of the same class will have a more consistent feature distribution, and in view of this, optimizing the condensed data by class may accelerate convergence. The class is, for example, gender, race, age, and the like.

Thus, in some embodiments, the optimizing the condensed dataset may be separately performed for each class of condensed data.

Alternatively, in other embodiments, the optimizing the condensed dataset may be performed for all classes of condensed data together or for a group that aggregates one or more classes of condensed data.

In the case where the optimizing is separately performed for each class of condensed data, the optimizing the condensed dataset includes, for each class of condensed data, selecting one or more subsets of the same class of actual data in the actual dataset.

In particular, it may be specified in advance that, for each class of condensed data, $K(K \in \mathbb{N})$ subsets of the same class of actual data in the actual dataset will be selected.

Subsequently, a corresponding optimization is performed on the condensed data using each subset of the same class of actual data selected for each class of condensed data.

As shown in Fig. 2, in some embodiments, in step 124, for each class of condensed data, one subset of the same class of actual data in the actual dataset is selected.

For example, for a class $c$ ($1 \leq c \leq C$) of condensed data $\mathcal{B}_c^{\mathcal{S}}$, one subset, e.g., a $k$ ($1 \leq k \leq K$)-th subset $\mathcal{B}_{c\_k}^{\mathcal{T}}$, of the same class of actual data in the actual dataset is selected.

In step 126, a round of optimizations are performed on the condensed data using the one subset of the same class of actual data selected for each class of condensed data.

Optionally, in some embodiments, the optimizing the condensed dataset includes performing a differentiable data augmentation operation on the actual data and the condensed data used in the optimization (sub-step 1262).

For example, the differentiable data augmentation operation may be selected from one or more of the following: data flip, rotate, crop, and scale. For ease of description, the differentiable data augmentation operation may be denoted as $\mathcal{A}_c$.

Advantageously, the differentiable data augmentation operation may fully mine the details of the data to provide more valuable feature information.

The inventors of the present application have recognized that, the optimizing the condensed dataset enables the condensed dataset to learn the main feature of the actual data in the actual dataset, so as to present feature similar to those of the original dataset, and thus the original dataset can be approximated with the condensed dataset. Therefore, the condensed dataset can be optimized by extracting and fitting the feature of the actual data and the condensed data used in the optimization.

The inventors have also recognized that, a feature layer, particularly a penultimate layer, of a randomly initialized neural network, has inherent feature extraction and data clustering functions, which can be used to extract feature from data.

Therefore, in some embodiments, the optimizing the condensed dataset includes performing feature extraction on the actual data and the condensed data used in the optimization using a feature layer of a randomly initialized neural network (sub-step 1264).

For example, any neural network may be initialized first with a normal distribution, then a last layer of the network is removed, and a remaining feature layer that is at a penultimate layer is taken as an output. The neural network so obtained is denoted as $\varphi$. In particular, characterization vectors of the actual data and the condensed data used in the optimization may be calculated using φ.

Subsequently, fitting of the characterization vectors can be performed to optimize the condensed dataset.

For example, the following loss function may be calculated:

[equation 1]

$$L = \sum_{c=1}^{C} \left\| \frac{1}{|\mathcal{B}_{c\_k}^{\mathcal{T}}|} \sum_{(x,y) \in \mathcal{B}_{c\_k}^{\mathcal{T}}} \phi(\mathcal{A}_c(x)) - \frac{1}{|\mathcal{B}_c^{\mathcal{S}}|} \sum_{(s,y) \in \mathcal{B}_c^{\mathcal{S}}} \phi(\mathcal{A}_c(s)) \right\|^2$$

where y represents a label of the data.

Subsequently, fitting is performed using a method such as a stochastic gradient descent (sub-step 1266).

In particular, assuming that a learning rate is η, the concentration data is updated as follows:

[equation 2]

$$\mathcal{S} \leftarrow \mathcal{S} - \eta \nabla_{\mathcal{S}} L$$

where v is an operator for calculating a gradient.

Here, the loss function is calculated using an L2 norm. However, those skilled in the art will readily appreciate that this is only one example and the present disclosure is not limited thereto.

The inventors of the present application have recognized that, optimizations on various classes of condensed data are not correlated and therefore can be performed synchronously, thereby improving processing efficiency. Therefore, as shown in the equation 1, in some embodiments, by using one subset of the same class of actual data selected for each class of condensed data, various classes of condensed data may be simultaneously optimized (processed in parallel).

Alternatively, in some embodiments, various classes of condensed data may be optimized at different times(e.g., serially processed) to reduce the requirement for computing power.

After the step 126 is completed, in step 128, it is determined whether the quantity of the subsets of the same class of actual data that are selected for each class of condensed data has reached a specified quantity (such as K).

If it has reached the specified quantity ("YES" in the step 128), the process ends.

If it has not reached the specified quantity ("NO" in step 128), the process returns to the step 124, to select for each class of condensed data another subset of the same class of actual data in the actual dataset, and continue to optimize the condensed data.

In some embodiments, the subset of the same class of actual data in the actual dataset may be randomly selected each time. However, those skilled in the art will readily appreciate that the manner in which the subset of the actual data is selected is not limited thereto. For example, if each class of condensed data is much less than the same class of actual data, it can be specified that there is no intersection between the subsets of the actual data selected each time, to utilize as much actual data as possible for the optimization. Those skilled in the art will readily appreciate that, the quality of the optimization can be improved by selecting a larger number of the subsets of the actual data.

Therefore, by performing the dataset condensation in the above manner, the main feature of the actual data can be preserved to the maximum extent, so that the model trained will not be greatly affected, and convergence is fast, thereby having a high practical value.

Moreover, the inventors of the present application have recognized that, under the condition that the quantity, M, of the condensed data, is much less than the quantity, N, of the original data, the presence and removal of any original data will not significantly affect the parameter distribution of a model trained with condensed data. Specifically, a change in the model parameter distribution (measured by Kullback-leibler (kl) divergence) caused by the removal of any original data is

$$O\left(\frac{M}{N}\right)$$

. That is, in theory, the dataset condensation processing can delete privacy information.

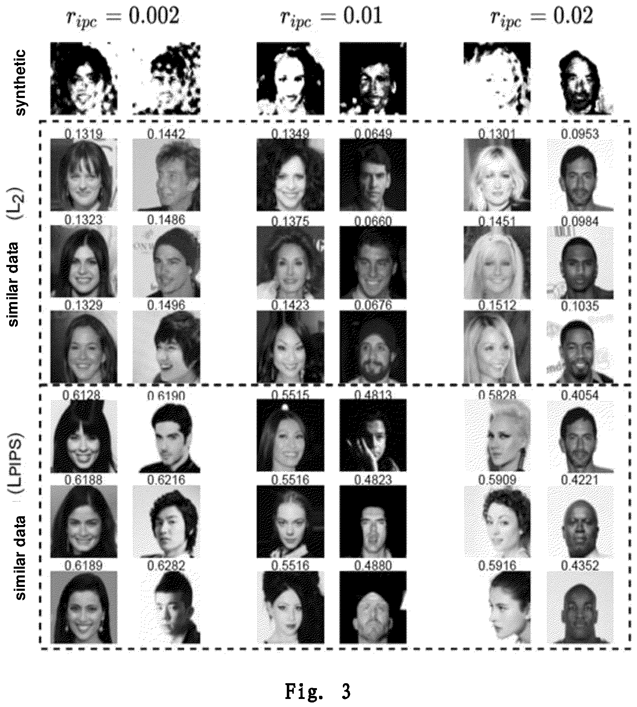

In addition, a protection effect of the dataset condensation processing for privacy information can be intuitively presented in conjunction with Fig. 3. Fig. 3 illustrates a comparison diagram between synthetic data obtained after performing dataset condensations on datasets of face images using different condensation rates ($\gamma_{ipc}$=0.002, 0.01, and 0.02) and face images (i.e., similar data) in the dataset of the face images that are similar to the synthetic data. Above each similar face image, an L2 norm and an image perceptual similarity index (LPIPS) of the face image with the synthesis data are marked. The smaller the L2 norm, or the larger the LPIPS, the higher the similarity. It can be observed that the synthesis data has a similar profile to the similar data, but it is difficult to confirm identity information according to the synthesis data due to a low similarity of a fine-grained facial feature. This proves that the dataset condensation processing can visually protect privacy information.

Moreover, the model trained by the condensed data will not leak the membership information of the original data used to generate the condensed data either. That is, it is impossible to determine whether a certain data sample has been used to generate the condensed data based on a loss function value of the model. Specifically, accuracy of data membership estimation based on the loss function value of the model is about 50%, approximate to random guess. Therefore, the dataset condensation processing can remove traces of the privacy information from the trained model, ensuring privacy protection of the model.

Therefore, protection of privacy information can be achieved by training the model using the condensed dataset resulting from the dataset condensation.

Next, as shown in Fig. 1, in the step 130, a model is trained using the condensed dataset.

In various embodiments, in the step 130, training the model may include one or more of retraining the model, performing domain adaptation, or adjusting (updating) the model.

For a device with limited computing power, such as an edge computing device, in order to reduce substantial computational cost required to retrain the neural network model using the actual data, it is possible to downloaded a pre-trained model and perform only domain adaptation using the actual data.

The inventors of the present application have recognized that, although domain adaptation may reduce some workload compared to retraining the model, it has still large computational overhead and has a risk of privacy leakage. The above two problems can be advantageously solved simultaneously by performing a dataset condensation to remove privacy information and performing domain adaptation using the condensed dataset, according to the embodiments of the present disclosure.

For example, in some embodiments, the model training method 100 may further include acquiring a pre-trained model (step 140). Therefore, in the training the model using the condensed dataset (in the step 130), the pre-trained model is trained. That is, the step 130 is to perform domain adaptation using the condensed dataset.

Assuming that the acquired pre-trained model is $f_\theta$, where $\theta$ is a parameter of the pre-trained model, and a learning rate of domain adaptation is $r$, then by using the condensed dataset $\mathcal{S}$, the pre-trained model can be fine-tuned in the following way:

[equation 3]

$$\theta \leftarrow \theta - r\nabla_\theta(L(f_\theta, \mathcal{B}_\mathcal{S}))$$

where $\mathcal{B}_\mathcal{S}$ is a batch sample randomly selected from $\mathcal{S}$.

By repeating the above fine-tuning process several times, domain adaptation can be achieved.

In some embodiments, the pre-trained model may be downloaded from a cloud. Alternatively, in some embodiments, the pre-trained model may be downloaded from an external storage device . Those skilled in the art will readily appreciate that, the manner of acquiring the pre-trained model is not limited thereto and may be selected as needed.

In addition, in some embodiments, the steps 110-130 may be repeated to adjust the trained model using the updated actual data, thereby better adapting to the actual situation and reducing the workload required for retraining or re-domain adapting the model each time.

As shown in Fig. 1, optionally, in some embodiments, the model training method 100 further includes performing model compression on the trained model (step 150).

Advantageously, compressing the model using a model compression technique prior to model deployment may not only further reduce a size of the model to make the model more adapted to an application apparatus such as an edge computing device, but also further reduce privacy leakage of the model.

In some embodiments, the model training method 100 further includes distributing the trained model to an application apparatus related to the acquired actual dataset (step 160).

Here, "related" refers to the fact that data to be processed by the application apparatus using the trained model has the same distribution as the actual dataset. For example, the actual dataset is a face image set of a specific minority, the application apparatus is an image sensor of an unmanned supermarket in a colony of the above minority, and customer data of the unmanned supermarket to be processed and the actual dataset have the same distribution. For another example, visit feature of customers in different goods areas within the same supermarket may not be exactly the same, so that there is a difference between customer data collected from image sensors arranged in the different goods areas, and data to be processed by an image sensor located in a certain goods area has the same distribution as an actual customer dataset collected by the image sensor of the goods area. Thus, the trained model may have a better performance on the data to be processed.

In some embodiments, the model training method 100 further includes obtaining a trained model obtained by performing the above steps.

According to an embodiment of the present disclosure, a method for generating a model may include performing steps of the model training method according to the embodiment of the present disclosure to generate a model.

Accordingly, a model deployment method according to an embodiment of the present disclosure may include deploying a trained model obtained by performing steps of the model training method according to the embodiment of the present disclosure, to process data.

The actual data used to obtain the trained model has the same distribution as data to be processed.

The model deployment method according to the embodiment of the present disclosure may be performed by any apparatus comprising a processing device. For example, in some embodiments, the model deployment method may be performed by an end device (such as an image sensor) having model inference and testing capabilities.

It is worth noting that the boundaries between various steps in the method described above are merely illustrative. In practical operations, steps can be combined arbitrarily, and even synthesized into a single step. In addition, the execution order of the steps is not limited by the described order, and some of the steps may be omitted. The operation steps of various embodiments may also be combined with one another in any suitable order, thereby similarly implementing more or less operations than those described.

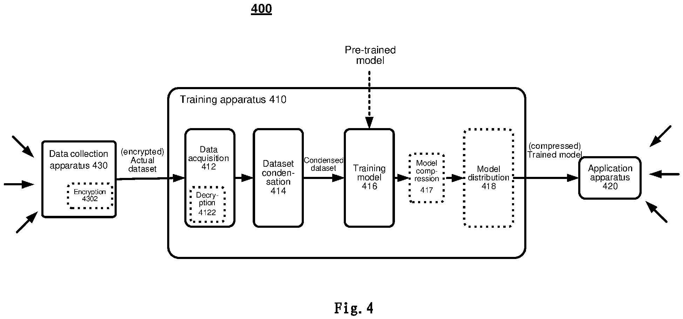

An apparatus and system for privacy protection according to an embodiment of the present disclosure is exemplarily described below in conjunction with Fig. 4. For ease of understanding, Fig. 4 also illustrates main functional modules of the apparatus and information interaction thereof.

According to the embodiment of the present disclosure, the system 400 for privacy protection may include a training apparatus 410. In particular, in various embodiments, the training apparatus 410 may be configured to perform steps of the model training method according to the embodiment of the present disclosure. The content described above in conjunction with Figs. 1 to 2 may also be adapted to corresponding features, so that some of the repetitive content will be omitted.

In the embodiment of the present disclosure, as shown in Fig. 4, the training apparatus 410 may include:

a data acquisition module 412 configured to acquire an actual dataset;

a dataset condensation module 414 configured to perform a dataset condensation on the actual dataset by compressing a size of the actual dataset while preserving main feature of actual data in the actual dataset, to remove privacy information; and

a training module 416 configured to train a model using a condensed dataset resulting from the dataset condensation.

Optionally, in some embodiments, the data acquisition module 412 includes a decryption sub-module 4122. The decryption sub-module 4122 is configured to decrypt a received encrypted actual dataset.

In some embodiments, the dataset condensation module 414 may be configured to establish an initial condensed dataset and optimize the condensed dataset, so that the condensed dataset has the main feature of the actual data in the actual dataset. The established condensed dataset $\mathcal{S}$ is smaller than the actual dataset $\mathcal{T}$. In particular, in some embodiments, the condensed dataset $\mathcal{S}$ is much smaller than the actual dataset $\mathcal{T}$.

In some embodiments, the dataset condensation module 414 may adjust a condensation rate of the dataset condensation as needed.

In some embodiments, the dataset condensation module 414 may be configured to, when establishing the initial condensed dataset, perform random initialization, e.g., normal distribution initialization, on the condensed dataset.

In some embodiments, the dataset condensation module 414 may be configured to separately perform an optimization for each class of condensed data.

Alternatively, in other embodiments, the dataset condensation module 414 may be configured to perform an optimization for all classes of condensed data together or for a group that aggregates one or more classes of condensed data.

In the case of separately performing an optimization for each class of condensed data, the dataset condensation module 414 may be configured to, for each class of condensed data, select one or more subsets of the same class of actual data in the actual dataset, and perform a corresponding optimization on the condensed data using each subset of the same class of actual data selected for each class of condensed data.

Optionally, in some embodiments, the dataset condensation module 414 may be configured to perform a differentiable data augmentation operation on the actual data and the condensed data used in the optimization.

In some embodiments, the dataset condensation module 414 may be configured to perform feature extraction on the actual data and the condensed data used in the optimization using a feature layer of a randomly initialized neural network, and then perform fitting using a method such as stochastic gradient descent.

In some embodiments, the training apparatus 410 may include a pre-trained model acquisition module (not illustrated) to acquire a pre-trained model. Therefore, the training module 416 may train the pre-trained model using the condensed dataset, i.e., perform domain adaptation.

In some embodiments, the training apparatus 410 may further include a model distribution module 418. The model distribution module 418 is configured to distribute the trained model to an application apparatus related to the acquired actual dataset. Here, "related" refers to the fact that data to be processed by the application apparatus using the trained model has the same distribution as the actual dataset.

Optionally, in some embodiments, the training apparatus 410 may further include a model compression module 417. The model compression module 417 is configured to compress the model using a model compression technique.

According to the embodiment of the present disclosure, the system 400 for privacy protection may include an application apparatus 420. The application apparatus 420 may be configured to deploy a trained model obtained by performing steps of the model training method according to the embodiment of the present disclosure, i.e., a trained model obtained by the training apparatus 410, to process data.

The actual data used to obtain the trained model has the same distribution as the data to be processed. That is, the model deployed by the application apparatus 420 is obtained by using the condensed dataset of the actual dataset having the same distribution as the data to be processed as training data. As analyzed above, this is beneficial to improve the adaptability and accuracy of the model for the actual application scenario.

In particular, in various embodiments, the application apparatus 420 may be configured to perform steps of the model deployment method according to the embodiment of the present disclosure.

In some embodiments, the application apparatus 420 may be configured to directly collect the data to be processed. Alternatively, in some embodiments, the application apparatus 420 may be configured to acquire the data to be processed from an external apparatus and process it.

In some embodiments, the system 400 further includes a data collection apparatus 430. The data collection apparatus 430 may be configured to collect the actual dataset used to obtain the trained model deployed by the application apparatus 420, and transmit the actual dataset to the training apparatus.

Optionally, the data collection apparatus 430 may include an encryption sub-module 4302 to encrypt the actual dataset to be transmitted.

In order to make the collected actual data have a data distribution as consistent as possible with the data to be processed, the data collection apparatus 430 may be arranged in relation to the application apparatus 420. For example, the data collection apparatus 430 and the application apparatus 420 may be arranged at same or close locations.

In other embodiments, the application apparatus 420 may be further configured to collect the actual dataset used to obtain the trained model deployed by the application apparatus, and transmit the actual dataset to the training apparatus. That is, the model for processing data that is deployed by the application apparatus 420 is trained by a condensed dataset of the actual dataset collected by the application apparatus. That is, the corresponding functions of the data collection apparatus 430 shown in Fig. 4 may be implemented by the application apparatus 420.

Alternatively, in some embodiments, the system 400 may not include a dedicated data collection apparatus 430, but rather acquire the actual dataset from outside the system.

The system 400 illustrated in Fig. 4 may be applied in a variety of scenarios, especially business scenarios for various computer vision classification tasks.

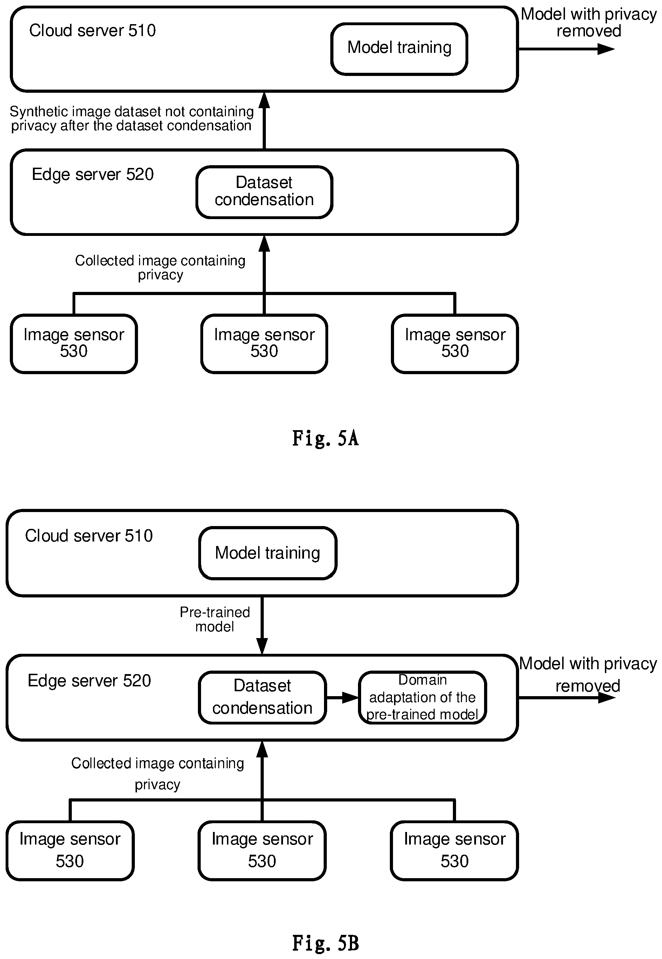

Figs. 5A-5C illustrate a number of application examples of a solution for privacy protection according to an embodiment of the present disclosure.

In the example shown in Fig. 5A, an edge server performs a dataset condensation on images containing privacy (i.e., an actual dataset), and provides a synthetic image dataset (i.e., a condensed dataset) obtained after the condensation to a cloud for model training, thereby effectively preventing privacy data leakage. Specifically, image sensor(s) 530 transmit(s) collected images containing privacy to an edge server 520. The edge server 520 performs a dataset condensation on a received image dataset to obtain a synthetic image dataset not containing privacy after the dataset condensation, and uploads the synthetic image dataset to the cloud server 510 for training of a model, so that a model with privacy removed can be obtained. The corresponding model can be deployed to an application side, to effectively prevent privacy data leakage of the application side.

In this example, the dataset condensation may be performed using a DC algorithm such as DM, KIP, and DSA. The above algorithm is relatively simple in calculation and is suitable for an edge side with limited computing power.

Fig. 5B illustrates another application example of a solution for privacy protection according to an embodiment of the present disclosure. The example illustrated in Fig. 5B differs from the example illustrated in Fig. 5A in that, after performing a dataset condensation on images containing privacy (i.e., an actual dataset), an edge server does not provide a synthetic image dataset (i.e., a condensed dataset) obtained after the condensation to a cloud, but directly performs domain adaptation of a pre-trained model using the synthetic image dataset. Specifically, image sensor(s) 530 transmit(s) collected images containing privacy to an edge server 520. In addition, the edge server 520 downloads a pre-trained model from a cloud server 510. The edge server 520 performs a dataset condensation on a received image dataset to obtain a synthetic image dataset not containing privacy after the dataset condensation, and performs domain adaptation of the pre-training model using the synthetic image dataset, so that a model with privacy removed can be obtained. The corresponding model can be deployed to an application side, to effectively prevent privacy data leakage of the application side. For example, in an unmanned supermarket, the dataset condensation and domain adaptation can be performed using a local edge server. The trained model with privacy removed may be deployed on an end device (application apparatus) such as a sensor having inference and testing capabilities.

In this example, the dataset condensation may also be performed using the DC algorithm suitable for the edge side, such as DM, KIP, and DSA.

In the example shown in Fig. 5C, a cloud server performs a dataset condensation on received images containing privacy (i.e., an actual dataset), and performs model training using a synthetic image dataset (i.e., a condensed dataset) obtained after the condensation. Specifically, image sensor(s) 530 transmit(s) collected images containing privacy to a cloud server 510. The cloud server 510 performs a dataset condensation on a received image dataset to obtain a synthetic image dataset not containing privacy after the dataset condensation, and performs model training by using the synthetic image dataset, so that a model with privacy information removed can be obtained. The corresponding model can be deployed to an application side, to effectively prevent privacy data leakage of the application end.

In this example, the dataset condensation may be performed using not only the DC (data condensation in the narrow sense) algorithm such as DM, KIP, and DSA, but also various DD (data distillation) algorithms that are complex in calculation and have a high requirement for computing power.

Those skilled in the art will appreciate that the application of the solution for privacy protection is not limited to the above examples.

Furthermore, it should be understood by those skilled in the art that, although only one application apparatus 420 is illustrated in Fig. 4, the number of the application apparatus is not limited thereto. For example, in some embodiments, the system 400 may include a plurality of application apparatuses 420. The training apparatus 410 can distribute and deploy a corresponding trained model to each of these application apparatuses, to process data.

In some embodiments, the training apparatus 410 may distribute and deploy the same trained model to each of these application apparatuses 420.

Alternatively, in some embodiments, the training apparatus 410 may distribute and deploy different trained models to at least two of these application apparatuses 420.

As analyzed above, for each application apparatus 420, the actual data used to obtain the deployed model has the same distribution as the data to be processed. When there is a large difference between the data to be processed of the plurality of application apparatuses 420 or the application apparatuses 420 has a high requirement for the accuracy of the model, it is possible to obtain an experimental dataset having a consistent distribution with the data to be processed for each application apparatus 420 and perform corresponding dataset condensation and training, thereby obtaining a dedicated model that is particularly adapted to this application apparatus.

For example, visit feature of customers in different goods areas within the same supermarket may not be exactly the same, so that there is a difference between customer data collected from image sensors arranged in the different goods areas. By deploying, on an image sensor located in a certain goods area, a model trained by a condensed dataset of customer datasets in the goods area, processing accuracy of the image sensor may be improved.

Furthermore, an appropriate model can be flexibly deployed according to a hardware condition, importance, and the like of an individual application apparatus. As analyzed above, an operating requirement of the trained model distributed to the application apparatus can be adjusted by setting an appropriate condensed data compression ratio and performing model compression.

The inventors of the present application have recognized that, there lacks a technical means for balance between privacy protection and data quality in a data transaction market in the big data era. In view of this, the present application provides a new solution. Specifically, among an original data provider (such as a user), a data supplier, and a data demander, data condensation is introduced, to implement flexible data product transactions according to different information protection regulations of various countries or the requirements of the data provider for privacy protection.

In some embodiments, the data provider may, for each dataset supplied, provide information regarding privacy protection intensity and training model performance that corresponds to different condensation rates, and store the information in a storage device of a corresponding processing apparatus (e.g. , computer) . In general, the smaller the condensation rate, the higher the privacy protection intensity, and the lower the training model performance, and vice versa.

For example, in some embodiments, the data provider may provide a data list of privacy protection intensity and training model performance that corresponds to discrete condensation rates. Alternatively, in some embodiments, the data provider may provide graphs of privacy protection intensity and training model performance as a function of the condensation rate. Alternatively still, in some embodiments, the data provider may provide example original datasets and their condensed datasets for different condensation rates, to visually present privacy protection intensities and training model performances for different condensation rates. Those skilled in the art will readily appreciate that the specific manner is not limited thereto.

On one hand, in some embodiments, based on requirements for accuracy in a scenario of applying a model and/or local information protection regulations regarding privacy protection, etc., the data demander may autonomously select or be recommended a corresponding condensation rate to ensure a corresponding training model performance and/or privacy protection intensity. In response to the selection or confirmation by the demander, a computer performs corresponding data condensation processing and generates a condensed dataset.

On the other hand, in some embodiments, the original data provider may also specify a privacy protection intensity requirement of original data provided. When collecting the original data, the data supplier specifies a condensation rate for the original data according to the requirements of the original data provider, to ensure the corresponding privacy protection intensity requirement, thereby facilitating subsequent generation of a condensed dataset meeting the specified requirement.

An embodiment of the present disclosure further provides a computer-readable storage medium having one or more instructions stored thereon that, when executed by a processor, cause the processor to perform steps of the model training method or the model deployment method in the above embodiments.

An embodiment of the present disclosure further provides a computer program product comprising one or more instructions that, when executed by a processor, cause the processor to perform steps of the model training method or the model deployment method in the above embodiments.

It should be understood that, the instructions in the computer-readable storage medium according to the embodiment of the present disclosure may be configured to perform operations corresponding to the above system and method embodiments. When referring to the above system and method embodiments, the embodiment of the computer-readable storage medium will be apparent to those skilled in the art, and therefore will not be repeated. The computer-readable storage medium for carrying or comprising the above instructions also falls within the scope of the present disclosure. Such a computer-readable storage medium may include, but is not limited to, a floppy disk, optical disk, magneto-optical disk, memory card, memory stick, and the like.

An embodiment of the present disclosure further provides various apparatuses including components or units for performing steps of the model training method or the model deployment method in the above embodiments.

It should be noted that the above components or units are only logic modules divided according to the specific functions realized by the components or units, and are not used to limit the specific implementations, for example, they may be implemented in software, hardware or a combination of the software and the hardware. In actual implementations, the above components or units may be implemented as separate physical entities, or may also be implemented by a single entity (e.g., a processor (CPU or DSP, etc.), an integrated circuit, etc.). For example, a plurality of functions included in one unit in the above embodiments may be implemented by separate devices. Alternatively, a plurality of functions implemented by a plurality of units in the above embodiments may be implemented by separate devices, respectively. In addition, one of the above functions may be implemented by a plurality of units.

In addition, it should be understood that the above series of processes and devices may also be implemented by software and/or firmware. In the case where they are implemented by software and/or firmware, a program constituting the software is installed from a storage medium or a network to a computer having a dedicated hardware structure, such as a general-purpose computer 600 shown in Fig. 6, so that the computer, when installed with various programs, is capable of executing various functions and the like. Fig. 6 illustrates an example block diagram of a computer that can be implemented as a training apparatus, application apparatus, and system according to an embodiment of the present disclosure.

In Fig. 6, a central processing unit (CPU) 601 performs various processes according to a program stored in a read-only memory (ROM) 602 or a program loaded from a storage part 608 to a random access memory (RAM) 603. In the RAM 603, data required when the CPU 601 performs various processes and the like is also stored as needed.

The CPU 601, ROM 602, and RAM 603 are connected to each other via a bus 604. An input/output interface 605 is also connected to the bus 604.

The following parts are connected to the input/output interface 605: an input part 606 including a keyboard, mouse, etc.; an output part 607 including a display, such as a cathode ray tube (CRT), liquid crystal display (LCD), and speaker, etc.; the storage part 608 including a hard disk, etc.; and a communication part 609 including a network interface card such as a LAN card and modem. The communication part 609 performs communication processing via a network such as the Internet.

A drive 610 is also connected to the input/output interface 605 as needed. A removable medium 611 such as a magnetic disk, optical disk, magneto-optical disk, and semiconductor memory, is mounted on the drive 610 as needed, so that a computer program read out therefrom is installed into the storage part 608 as needed.

In the case of implementing the above series of processes by software, a program constituting the software is installed from a network such as the Internet or a storage medium such as the removable medium 611.

It should be understood by those skilled in the art that this storage medium is not limited to the removable medium 611 shown in Fig. 6 that has therein stored a program and is distributed separately from the apparatus to provide the program to the user. Examples of the removable medium 611 include a magnetic disk (including a floppy disk (registered trademark)), an optical disk (including a compact disc read-only memory (CD-ROM) and a digital versatile disc (DVD)), a magneto-optical disk (including a mini disk (MD) (registered trademark)), and a semiconductor memory. Alternatively, the storage medium may be the ROM 602, a hard disk included in the storage part 608, or the like, in which a program is stored, and together with the device including them, distributed to the user.

The exemplary embodiments of the present disclosure are described above with reference to the drawings, but the present disclosure is of course not limited to the above examples. Those skilled in the art can obtain various changes and modifications within the scope of the attached claims, and should understand that these changes and modifications will naturally fall within the technical scope of the present disclosure.

Although the present disclosure and its advantages have been described in detail, it should be understood that various changes, substitutions and alterations can be made without departing from the spirit and scope of the present disclosure that are defined by the attached claims. Moreover, the terms "include", "contain", or any other variation thereof in the embodiments of the present disclosure are intended to cover a non-exclusive inclusion, such that a process, method, article, or device that includes a list of elements not only includes those elements, but also includes other elements not expressly listed, or elements inherent to such a process, method, article, or device. Without more limitations, an element defined by a statement "including one ..." does not exclude the presence of another identical element in a process, method, article, or device that includes the element.

The embodiments of the present disclosure further include:

1. a model training method, comprising:

acquiring an actual dataset;
performing a dataset condensation on the actual dataset by compressing a size of the actual dataset while preserving main feature of actual data in the actual dataset, to remove privacy information; and
training a model using a condensed dataset resulting from the dataset condensation.

2. The method of item 1, wherein the performing the dataset condensation on the actual dataset comprises:

establishing an initial condensed dataset, wherein the established condensed dataset is smaller than the actual dataset; and
optimizing the condensed dataset so that the condensed dataset has the main feature of the actual data in the actual dataset.

3. The method of item 2, wherein the optimizing the condensed dataset is separately performed for each class of condensed data.

4. The method of item 3, wherein the optimizing the condensed dataset comprises:

for each class of condensed data, selecting one or more subsets of the same class of actual data in the actual dataset; and
performing a corresponding optimization on the condensed data using each subset of the same class of actual data selected for each class of condensed data.

5. The method of item 2, wherein the optimizing the condensed dataset comprises:
performing a differentiable data augmentation operation on the actual data and the condensed data used in the optimization.

6. The method of item 2, wherein the optimizing the condensed dataset comprises:
performing feature extraction on the actual data and the condensed data used in the optimization using a feature layer of a randomly initialized neural network.

7. The method of item 1, wherein the performing the dataset condensation on the actual dataset further comprises:

adjusting a condensation rate of the dataset condensation as needed.

8. The method of item 1, wherein the method further comprises :

acquiring a pre-trained model, and
in the training the model using the condensed dataset, training the pre-trained model.

9. The method of item 1, wherein the method further comprises:

determining whether the acquired actual dataset contains privacy information, and
in the performing the dataset condensation on the actual dataset, performing the dataset condensation only on the actual dataset which contains privacy information.

10. The method of item 1, wherein the method further comprises :
performing model compression on the trained model.

11. The method of item 1, wherein the method further comprises :
distributing the trained model to an application apparatus related to the acquired actual dataset.

12. A model deployment method, comprising:

deploying a trained model obtained by performing the method of any of items 1-11, to process data,
wherein the actual data used to obtain the trained model has the same distribution as data to be processed.

13. A training apparatus, comprising:

a data acquisition module configured to acquire an actual dataset;
a dataset condensation module configured to perform a dataset condensation on the actual dataset by compressing a size of the actual dataset while preserving main feature of actual data in the actual dataset, to remove privacy information; and
a training module configured to train a model using a condensed dataset resulting from the dataset condensation.

14. The apparatus of item 13, wherein the dataset condensation module is configured to:

establish an initial condensed dataset, wherein the established condensed dataset is smaller than the actual dataset; and
optimize the condensed dataset so that the condensed dataset has the main feature of the actual data in the actual dataset.

15. An application apparatus, comprising a processing device configured to perform steps of the method of item 12.

16. A system for privacy protection, comprising:

the training apparatus of any of items 13-14; and
an application apparatus configured to deploy a trained model obtained by the training apparatus, to process data,
wherein the actual data used to obtain the trained model has the same distribution as data to be processed.

17. The system of item 16, wherein the application apparatus is further configured to collect the actual dataset used to obtain the trained model that the application apparatus deploys and transmit the actual dataset to the training apparatus.

18. The system of item 16, further comprising a data collection apparatus configured to collect the actual dataset used to obtain the trained model that the application apparatus deploys and transmit the actual dataset to the training apparatus.

19. A computer-readable storage medium having one or more instructions stored thereon that, when executed by a processor, cause the processor to perform steps of the method of any of items 1-11 and/or steps of the method of item 12.

20. A computer program product comprising one or more instructions that, when executed by a processor, cause the processor to perform steps of the method of any of items 1-11 and/or steps of the method of item 12.

21. A method for generating a model, comprising generating a model by performing steps of the method of any of items 1-11.

**Claims**

1. A model training method, comprising:

   acquiring an actual dataset;
   performing a dataset condensation on the actual dataset by compressing a size of the actual dataset while preserving main feature of actual data in the actual dataset, to remove privacy information; and
   training a model using a condensed dataset resulting from the dataset condensation.

2. The method of claim 1, wherein the performing the dataset condensation on the actual dataset comprises:

   establishing an initial condensed dataset, wherein the established condensed dataset is smaller than the actual dataset; and
   optimizing the condensed dataset so that the condensed dataset has the main feature of the actual data in the actual dataset.

3. The method of claim 2, wherein the optimizing the condensed dataset is separately performed for each class of condensed data.

4. The method of claim 3, wherein the optimizing the condensed dataset comprises:

   for each class of condensed data, selecting one or more subsets of the same class of actual data in the actual dataset; and
   performing a corresponding optimization on the condensed data using each subset of the same class of actual data selected for each class of condensed data.

5. The method of claim 2, wherein the optimizing the condensed dataset comprises:
   performing a differentiable data augmentation operation on the actual data and the condensed data used in the optimization.

6. The method of claim 2, wherein the optimizing the condensed dataset comprises:
   performing feature extraction on the actual data and the condensed data used in the optimization using a feature layer of a randomly initialized neural network.

7. The method of claim 1, wherein the performing the dataset condensation on the actual dataset further comprises:
   adjusting a condensation rate of the dataset condensation as needed.

8. The method of claim 1, wherein the method further comprises:

   acquiring a pre-trained model, and
   in the training the model using the condensed dataset, training the pre-trained model.

9. The method of claim 1, wherein the method further comprises:

   determining whether the acquired actual dataset contains privacy information, and
   in the performing the dataset condensation on the actual dataset, performing the dataset condensation only on the actual dataset which contains privacy information.

10. The method of claim 1, wherein the method further comprises:
    performing model compression on the trained model.

11. The method of claim 1, wherein the method further comprises:
    distributing the trained model to an application apparatus related to the acquired actual dataset.

12. A model deployment method, comprising:

    deploying a trained model obtained by performing the method of any of claims 1-11, to process data,
    wherein the actual data used to obtain the trained model has the same distribution as data to be processed.

**13.** A training apparatus, comprising:

a data acquisition module configured to acquire an actual dataset;
a dataset condensation module configured to perform a dataset condensation on the actual dataset by compressing a size of the actual dataset while preserving main feature of actual data in the actual dataset, to remove privacy information; and
a training module configured to train a model using a condensed dataset resulting from the dataset condensation.

**14.** The apparatus of claim 13, wherein the dataset condensation module is configured to:

establish an initial condensed dataset, wherein the established condensed dataset is smaller than the actual dataset; and
optimize the condensed dataset so that the condensed dataset has the main feature of the actual data in the actual dataset.

**15.** An application apparatus, comprising a processing device configured to perform steps of the method of claim 12.

**16.** A system for privacy protection, comprising:

the training apparatus of any of claims 13-14; and
an application apparatus configured to deploy a trained model obtained by the training apparatus, to process data,
wherein the actual data used to obtain the trained model has the same distribution as data to be processed.

**17.** The system of claim 16, wherein the application apparatus is further configured to collect the actual dataset used to obtain the trained model that the application apparatus deploys and transmit the actual dataset to the training apparatus.

**18.** The system of claim 16, further comprising a data collection apparatus configured to collect the actual dataset used to obtain the trained model that the application apparatus deploys and transmit the actual dataset to the training apparatus.

**19.** A computer-readable storage medium having one or more instructions stored thereon that, when executed by a processor, cause the processor to perform steps of the method of any of claims 1-11 and/or steps of the method of claim 12.

**20.** A computer program product comprising one or more instructions that, when executed by a processor, cause the processor to perform steps of the method of any of claims 1-11 and/or steps of the method of claim 12.

**21.** A method for generating a model, comprising:
generating a model by performing steps of the method of any of claims 1-11.

**100**

Acquire an actual dataset ⌐110

↓

Determine whether the actual dataset contains privacy information ⌐170

Acquire a pre-trained model ⌐140

↓

Perform a dataset condensation on the actual dataset (containing privacy) ⌐120

↓

Train a model using a condensed dataset (Domain adaptation) ⌐130

↓

Perform model compression ⌐150

↓

Distribute the trained model ⌐160

Fig. 1

**120**

122

Establish an initial
condensed dataset

124

For each class of condensed
data, select one subset of the
same class of actual data in the
actual dataset

126

Perform a round of optimizations on the
condensed data using the one subset of the
same class of actual data selected for
each class of condensed data

1262

Differentiable data
augmentation operation

1264

Feature extraction

1266

Fit

128

The quantity of the subsets
of the same class of actual data that
are selected for each class of condensed data
has reached a specified quantity?

No

Yes

End

Fig. 2

Fig. 3

<u>400</u>

Pre-trained
model

Training apparatus 410

Data collection
apparatus 430

Encryption
4302

(encrypted)
Actual
dataset

Data
acquisition
412

Decry-
ption
4122

Dataset
conden-
sation
414

Condensed
dataset

Training
model
416

Model
comp-
ression
417

Model
distribution
418

(compressed)
Trained model

Application
apparatus
420

Fig. 4

Cloud server 510

Model training

Model with privacy removed →

Synthetic image dataset not containing privacy after the dataset condensation ↑

Edge server 520

Dataset condensation

Collected image containing privacy ↑

Image sensor 530

Image sensor 530

Image sensor 530

**Fig. 5A**

Cloud server 510

Model training

Pre-trained model ↓

Edge server 520

Dataset condensation → Domain adaptation of the pre-trained model

Model with privacy removed →

Collected image containing privacy ↑

Image sensor 530

Image sensor 530

Image sensor 530

**Fig. 5B**

Cloud server 510

Dataset condensation

Synthetic image dataset not containing privacy after the dataset condensation

Model training

Model with privacy removed

Collected image containing privacy

Image sensor 530

Image sensor 530

Image sensor 530

Fig. 5C

600

601 CPU

602 ROM

603 RAM

604

605 Input/output interface

606 Input part

607 Output part

608 Storage part

609 Communication part

610 Drive

611 Removable medium

Fig. 6

## INTERNATIONAL SEARCH REPORT

| | International application No. |
|---|---|
| | **PCT/CN2023/073347** |

### A. CLASSIFICATION OF SUBJECT MATTER

G06F 21/62(2013.01)i

According to International Patent Classification (IPC) or to both national classification and IPC

### B. FIELDS SEARCHED

Minimum documentation searched (classification system followed by classification symbols)

IPC: G06F 21, G06N 3

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 模型, 训练, 隐私, 保护, 数据集, 压缩, 浓缩, 大小, model, training, privacy, protection, dataset, concentration, compressing, condensed, size

### C. DOCUMENTS CONSIDERED TO BE RELEVANT

| Category* | Citation of document, with indication, where appropriate, of the relevant passages | Relevant to claim No. |
|---|---|---|
| PX | CN 114692197 A (SONY CORPORATION) 01 July 2022 (2022-07-01) description, paragraphs [0002]-[0217] | 1-21 |
| X | CN 105718948 A (JIANGNAN UNIVERSITY) 29 June 2016 (2016-06-29) description, paragraphs [0002]-[0037] | 1-21 |
| Y | CN 110084365 A (XIDIAN UNIVERSITY) 02 August 2019 (2019-08-02) description, paragraphs [0002]-[0122] | 1-21 |
| Y | CN 111008693 A (DEEPMOTION BEIJING CO., LTD.) 14 April 2020 (2020-04-14) description, paragraphs [0002]-[0113] | 1-21 |
| Y | US 2021241166 A1 (INTUIT INC.) 05 August 2021 (2021-08-05) description, paragraphs [0002]-[0098] | 1-21 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **23 March 2023** | **28 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

| INTERNATIONAL SEARCH REPORT<br>Information on patent family members | | | | International application No.<br>**PCT/CN2023/073347** | | |
|---|---|---|---|---|---|---|

| Patent document<br>cited in search report | | | Publication date<br>(day/month/year) | Patent family member(s) | | Publication date<br>(day/month/year) |
|---|---|---|---|---|---|---|
| CN | 114692197 | A | 01 July 2022 | None | | |
| CN | 105718948 | A | 29 June 2016 | None | | |
| CN | 110084365 | A | 02 August 2019 | None | | |
| CN | 111008693 | A | 14 April 2020 | None | | |
| US | 2021241166 | A1 | 05 August 2021 | US 11593711 | B2 | 28 February 2023 |

Form PCT/ISA/210 (patent family annex) (July 2022)